# EUROPÄISCHE PATENTSCHRIFT

(11) **EP 0 859 690 B1**
(45) Veröffentlichungstag und Bekanntmachung des Hinweises auf die Patenterteilung: **11.08.1999**
(21) Anmeldenummer: 96938099.7
(22) Anmeldetag: 05.11.1996
(51) Int. Cl.: B27G 19/02, B23Q 11/08, B27B 25/10

(54) **SCHUTZVORRICHTUNG FÜR KREISSÄGEN**
PROTECTIVE DEVICE FOR CIRCULAR SAWS
DISPOSITIF PROTECTEUR POUR SCIES CIRCULAIRES

(30) Priorität: 09.11.1995 DE 29517796 U
(43) Veröffentlichungstag der Anmeldung: 26.08.1998
(73) Patentinhaber: Kellner, Rudolf, D-84453 Mühldorf (DE)
(72) Erfinder: Kellner, Rudolf, D-84453 Mühldorf (DE)
(74) Vertreter: Seidel, Herta, Dipl.-Phys.
(86) Internationale Anmeldenummer: EP9604831
(87) Internationale Veröffentlichungsnummer: WO9717176

(56) Entgegenhaltungen:
- DE-C- 311 610
- DE-U- 29 512 571
- FR-A- 2 344 382
- FR-A- 2 561 977
- US-A- 1 346 269
- US-A- 2 425 331
- US-A- 2 466 325
- US-A- 4 399 728
- US-A- 4 576 072
- US-A- 5 181 447

## Beschreibung

Die Erfindung betrifft eine Schutzvorrichtung für Kreissägen gemäß Oberbegriff des Anspruches 1.

Eine Schutzhaube der gattungsgemäßen Art ist bereits aus der französischen Patentschrift FR PS 2561977 bekannt geworden.

Diese bekannte Schutzhaube liegt während des Arbeitsablaufes, das Kreissägeblatt überdeckend, auf dem zu bearbeitenden Werkstück auf. Während des Sägevorganges sammelt sich aber das Sägemehl innerhalb der Schutzhaube und zwar vor allem im Schnittbereich zwischen Sägeblatt und Werkstück.

Damit wird die Sicht auf die Schnittführung behindert und die Bedienungsperson dazu gezwungen, das Sägemehl noch vor Beendigung des Arbeitsvorganges zu beseitigen. Hierzu muß sie, wenn sie korrekt handelt, die Säge abstellen, dann die Schutzhaube hochheben und das Sägemehl von Hand entfernen. Es hat sich aber gezeigt, daß in der Praxis dieses zeitraubende Vorgehen doch nicht entsprechend der Vorschrift durchgeführt wird, sondern die Bedienungspersonen glauben stets, sie könnten das behindernde Sägemehl nach Anheben der Schutzhaube vom Werkstück auch bei rotierendem Sägeblatt entfernen. Die Folge ist, wie die Erfahrung zeigt, daß hierdurch immer wieder schwerwiegende Verletzungen vorkommen. Es ist zwar richtig, daß die bekannte Schutzhaube einen gewissen Schutz für die Bedienungsperson bietet, doch bleibt die Schutzhaube auch nach Fertigstellung des Schnittes auf einem fertig bearbeiteten Brett und dessen seitlichem Holzabfall liegen. Sie befindet sich somit in einem der Dicke des Werkstückes entsprechenden Abstand über dem Arbeitstisch, obwohl sich das Werkstück bereits im hinteren Bereich des Sägeblattes befindet. Daher bleibt für die Bedienungsperson die Gefahr einer unbeabsichtigten Berührung mit dem gezahnten Umfang der Säge und auch mit den Seitenflächen des Sägeblattes , wenn sie das Werkstück, die sich ansammelnden Sägespäne und den seitlichen Holzabfall entfernen will.

Aufgabe der vorliegenden Erfindung ist die Schaffung einer Schutzvorrichtung, die in der Lage ist, den gesamten, beim Sägevorgang anfallenden Holzabfall, also Sägemehl, Holzspäne und Schnittholzabfall aus dem Arbeitsbereich zu entfernen, ohne daß die Bedienungsperson die Notwendigkeit und vor allem auch gar nicht die Möglichkeit hat, durch eigene Tätigkeit an der Kreissäge Schaden zu nehmen. D.h. aber, daß sie während der gesamten Arbeitszeit keine Möglichkeit hat, in den Bereich des rotierenden Sägeblattes zu greifen, weder um das die Sicht behindernde Sägemehl zu entfernen, noch um ein durchschnittenes Brett, das sich aber noch im Bereich des Sägeblattes befindet, zu verschieben oder den seitlich des Sägeblattes befindlichen Holzabfall zu entfernen.

Dies wird durch die im Kennzeichen des Hauptanspruches genannte Kombination dadurch erreicht,
1. daß die Schutzhaube während des gesamten Arbeitsablaufes entweder auf dem Werkstück und/oder dem seitlichen Holzabfall solange aufliegt, bis Werkstück und Holzabfall aus dem Bereich des Sägeblattes hinausgeschoben sind, so daß für die Bedienungsperson keine Berührungsmöglichkeit mit dem Kreissägeblatt verbleibt,
2. daß an Trägerhaube und Schutzhaube Stirnflächen vorgesehen sind,die auch im angehobenen Zustand den Bereich abdichten, in dem sich beim Sägevorgang Sägemehl und Holzspäne bilden und herumwirbeln, die Sicht auf die Schnittführung behindern und gleichzeitig auch eine Gefahr für Auge und Lunge der Bedienungsperson darstellen, und infolge des steten und bis zum Arbeitsende andauernden Aufliegens der Schutzhaube auf Werkstück und Holzabfall die Möglichkeit schaffen, daß Sägemehl oder -späne durch eine Absaugvorrichtung abgesaugt werden, um die Sicht auf die Schnittführung zu erhalten und Beeinträchtigung von Augen- und Atemluft zu vermeiden, ohne daß die Bedienungsperson hierfür Sorge tragen müßte,
3. und daß ein Abfallschieber von etwa gleicher Höhe wie der Stärke des zu bearbeitenden Werkstückes vorgesehen ist, der die Aufgabe hat, die beim Schneiden entstehenden Holzabfälle und gegebenenfalls auch das Werkstück über den Maschinentisch hinauszuschieben und gleichzeitig dabei die Schutzhaube solange anzuheben, bis alle Abfälle beseitigt sind, um auch nach Fertigstellung des gewünschten Schnittes an einem Werkstück die Schnittgefahr für die Bedienungsperson auszuschließen.

Mit anderen Worten, durch die erfindungsgemäße Kombination werden alle beim Arbeiten mit einer Kreissäge anfallenden Abfälle automatisch vom Maschinentisch entfernt, ohne daß die Bedienungsperson der Gefahr unterliegt, in den Bereich des rotierenden Sägeblattes zu kommen. Das heißt aber mit anderen Worten, alle möglichen gesundheitlichen Beeinträchtigungen der Bedienungsperson sind durch die erfindungsgemäße Schutzeinrichtung in ihrer Gesamtheit von vornherein ausgeschlossen, so daß die Unfälle und gesundheitlichen Schäden, die in hoher Zahl jährlich bislang zu vermelden sind, verringert werden.

Weitere Einzelheiten ergeben sich aus den Unteransprüchen und der Beschreibung eines Ausführungsbeispiels anhand der Zeichnung.

Hierin zeigen:
- Fig. 1: eine, auf einem Kreissägetisch angeordnete Schutzvorrichtung nach der Erfindung von der Seite gesehen,
- Fig. 2: die in Fig. 1 gezeigte Vorrichtung von oben gesehen,
- Fig. 3: die in Fig. 1 gezeigte Schutzvorrichtung mit angehobener Schutzhaube,
- Fig. 4: den Maschinentisch mit verschiebbarem Arbeitstisch von oben gesehen,
- Fig. 5: die in Fig. 1 gezeigte Schutzvorrichtung in Arbeitsrichtung gesehen,
- Fig. 6: den Arbeitstisch mit verschwenkter Haltevorrichtung,
- Fig. 7: ein Zusatzteil für eine Verbreiterung der Schutzvorrichtung in Explosionsdarstellung,
- Fig. 8: eine verbreiterte Schutzvorrichtung für die Durchführung von Gehrungsschnitten,
- Fig. 9: eine Seitenansicht eines Abfallschiebers auf dem Maschinentisch einer Kreissäge,
- Fig.10: einen Querschnitt durch den in Fig. 9 gezeigten Maschinentisch mit Abfallschieber,
- Fig.11: eine Seitenansicht der Halterung eines höhenverstellbaren Abfallschiebers,
- Fig.12: einen Querschnitt durch einen auf dem Maschinentisch einer Kreissäge angeordneten höhenverstellbaren Abfallschieber,
- Fig.13: eine Draufsicht auf einen Abfallschieber für eine Kreissäge mit auf dem Schiebeschlitten angeordnetem Queranschlag,
- Fig.14: einen Querschnitt durch den in Fig. 13 gezeigten Abfallschieber mit Maschinentisch und
- Fig.15: eine Seitenansicht des in Fig. 13 in Draufsicht gezeigten Abfallschiebers.

Sich entsprechende Teile sind in den Figuren mit übereinstimmenden Bezugszeichen gekennzeichnet.

Ein Maschinengestell 1 trägt den Antriebsmotor für eine Kreissäge, deren Sägeblatt 2 über die Oberkante des Maschinengestells 1 hinausragt. Längs der einen Längsaußenkante des Maschinentisches 1 verläuft eine Gleitschiene 3a, und parallel zu dieser eine Gleitschiene 3b für den verschiebbaren Arbeitstisch 4, der einen Mittellängsspalt 5 für das Kreissägeblatt 2 definiert.

Am Maschinengestell 1 ist der eine Arm einer winkelförmigen Halterung 6 für eine Trägerhaube 7 angeschraubt. Mit Hilfe dieser Halterung 6 kann die Trägerhaube 7 zusammen mit einer unter ihr befindlichen Schutzhaube 8 nach oben geschwenkt werden, damit man das Kreissägeblatt 2 auswechseln kann. Die Trägerhaube 7 hat die Form eines länglichen, rechteckigen Kastens, dessen offene Seite nach unten zum Arbeitstisch 4 der Kreissäge 2 hin gerichtet ist. In einem wählbaren Abstand sind zwei gleichlange Hebel 9a,b, gelenkig in der Trägerhaube 7 angeordnet, die anderen Enden der beiden Hebel 9a,b, sind an der Schutzhaube 8 ebenfalls schwenkbar befestigt, und zwar im gleichen Abstand voneinander wie in der Trägerhaube 7. Mit Hilfe dieser Hebel 9a,b, kann die Schutzhaube 8 durch ein auf dem Arbeitstisch 4 durch die Kreissäge 2 geschobenes Werkstück angehoben werden und sich dabei in die Trägerhaube 7 hineinschieben. Während die Hebel 9a,b, bei dieser Bewegung eine Kreisbahn durchlaufen, verschiebt sich die Unterkante der Schutzhaube 8 parallel zum Arbeitstisch 4 nach oben. Da beim Anheben der Schutzhaube 8 die Hebel 9a und 9b schließlich nur noch in einem kleinen Winkel gegen die Horizontale verlaufen, muß, um weiteres Anheben der Schutzhaube 8 durch das Werkstück erreichen zu können, die hintere Seitenfläche 8b der Schutzhaube 8 zur unteren Kante hin gekrümmt ausgebildet sein. Auch die vordere obere Kante der Schutzhaube 8 durchläuft bei der Aufwärtsbewegung der Schutzhaube 8 eine Kreisbahn.

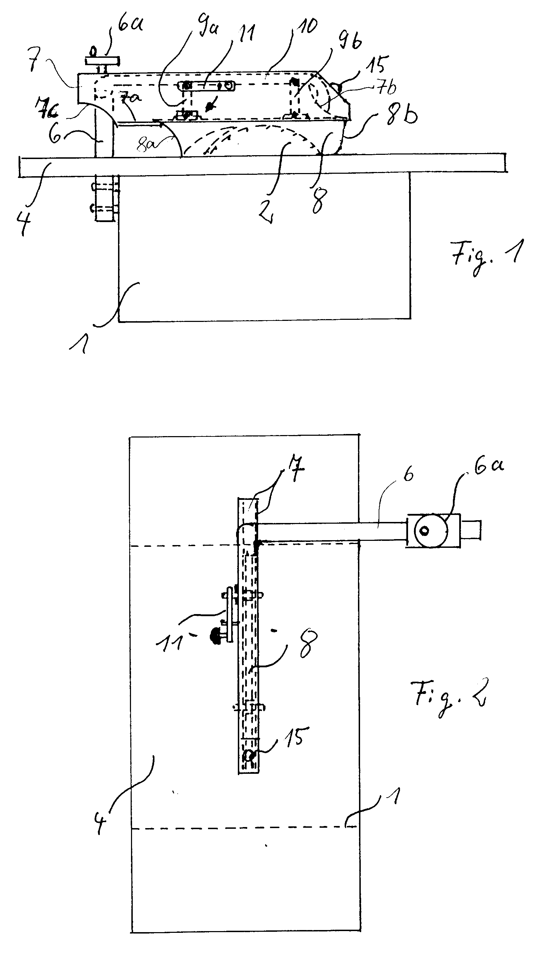

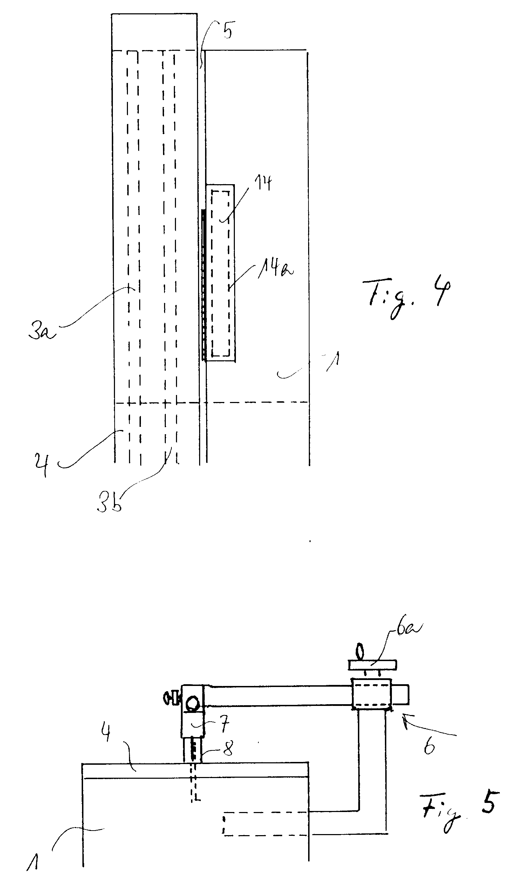

Aus diesem Grund ist die vordere, in der Zeichnung linke Stirnfläche 8a der Schutzhaube 8 kreiszylinderisch ausgebildet und gibt der Stirnfläche 8a eine konkave Gestalt, die bei ihrer Parallelverschiebung, in stetigem Kontakt mit der Bodenfläche 7a der Trägerhaube 7, sich in diese hineinbewegt. Da die obere Kante der hinteren Seitenfläche 8b der Schutzhaube 8 bei der Parallelverschiebung der Schutzhaube 8 ebenfalls eine Kreisbahn durchläuft, ist zur Abdichtung innerhalb der Trägerhaube 7 entlang der Kreisbahn der hinteren Seitenfläche 8b der Schutzhaube 8 eine konvexe, kreiszylindrische Abdichtungsfläche 7b eingebracht. Auf diese Weise gelingt es, daß sämtliche bei dem Sägevorgang entstehenden Späne innerhalb der Schutzhaube 8 und in der Trägerhaube 7 innerhalb des von der Dichtungsfläche 7b begrenzten Raumes bleiben und mittels einer Absaugleitung 10 am Ort ihres Entstehens, nämlich an dem der Bedienungsperson zugewandten Ende des Kreissägeblattes 2 abgesaugt und einer Absaugvorrichtung zugeführt werden können. Ein Austreten der Späne in den Raum und damit deren Gesundheitsgefährdung für die Bedienungsperson unterbleibt. Ferner wird die Arbeit erleichtert, da die Sicht auf das Werkstück erhalten bleibt, ohne daß von außen die Beseitung des Abfalles vorgenommen werden muß. An der Außenwandung der Trägerhaube 7 befindet sich noch ein weiterer Hebel 11, der bei vollständig angehobener Schutzhaube 8 nach unten geklappt und am unteren Rand der Trägerhaube 7 arretiert werden kann (siehe hierzu Fig. 3). Auf diese Weise läßt sich das Sägeblatt 2 leicht auswechseln.

Man kann aber auch, wie dies in Fig. 6 gezeigt ist, durch Schwenkung der Haltevorrichtung 6 die Schutzhaube 8 und die Trägerhaube 7 vollständig nach oben verschwenken und hat dann freien Zutritt zu dem Sägeblatt 2 und dem Arbeitstisch 4. Für die Arretierung der Haltevorrichtung 6 dient ein Feststeller 6a.

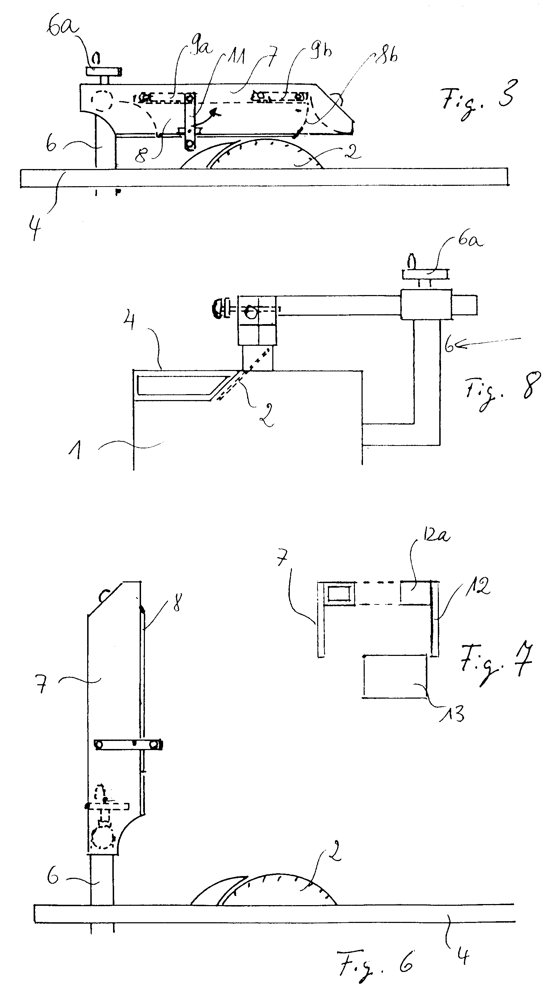

Hat man Gehrungsschnitte durchzuführen, so muß man das Sägeblatt 2 der Kreissäge als der Vertikalen um einen spitzen Winkel verschwenken (siehe Fig. 8). Da auch in dieser Lage des Sägeblattes 2 ein sicherer Schutz für die Bedienungsperson gewährleistet sein muß, ist in Fig. 8 der in Arbeitsrichtung gesehen rechte Seitenwandteil der Trägerhaube 7 und der Schutzhaube 8 lösbar mit dem linken, fest mit der Haltevorrichtung 6 verbundenen Teil verbunden. Es ist dadurch möglich, diese Seitenwandteile zu lösen und durch das in Fig. 7 gezeigte Austauschseitenwandteil 12 für die Trägerhaube 7 zu ersetzen, das über ein breiteres Abstandsteil 12a mit dem stationären Seitenwandteil 7 der Trägerhaube 7 verbindbar ist, und eine breitere Schutzhaube 13 einzusetzen. Die Breite des Abstandsteils 12a und der Schutzhaube 13 wird durch die Winkellage des Kreissägeblattes 2 bei Gehrungsschnitten bestimmt. Entsprechendes gilt bei einer Verschwenkung des Kreissägeblattes 2 nach links.

Sowohl bei der Ausführung von Schnitten bei vertikaler Stellung des Kreissägeblattes 2 als auch bei verschwenktem Sägeblatt 2 für die Durchführung von Gehrungsschnitten wird das Werkstück mit dem Arbeitstisch 4 in Richtung zum Sägeblatt 2 hin verschoben. Durch das Werkstück hebt sich die Kante 8b der Schutzhaube 8 an und bewegt sich in die Trägerhaube 7 hinein. Gleichzeitig werden die entstehenden Sägespäne durch die Absaugvorrichtung über die Leitung 10 abgesaugt.

Die beim Schnitt entstehenden Holzabfälle, die neben dem Sägeblatt liegen und die gleiche Stärke wie das zu bearbeiende Werkstück haben, heben die Schutzhabe aber auch noch nach Fertigstellung des Schnittes an, unter Umständen hebt auch das bereits bearbeitete Werkstück, das sich noch mit hinteren Bereich des Sägeblattes befindet, die Schutzhaube weiterhin an, so daß ein Zugriff an die Seitenflächen und die Schneidzähne des Sägeblattes von vorne möglich wäre, deshalb benötigt man einen sogenannten Abfallschieber, der die Aufgabe hat, einerseits die beim Schneiden entstehenden Abfälle über den Maschinentisch hinauszuschieben und andererseits die Kreissäge solange abzudecken und die Schutzhaube anzuheben, bis diese Abfälle beseitigt sind, um auch nach Fertigstellung der gewünschten Schnitte an einem Werkstück die Schnittgefahr für die Bedienungsperson auszuschließen.

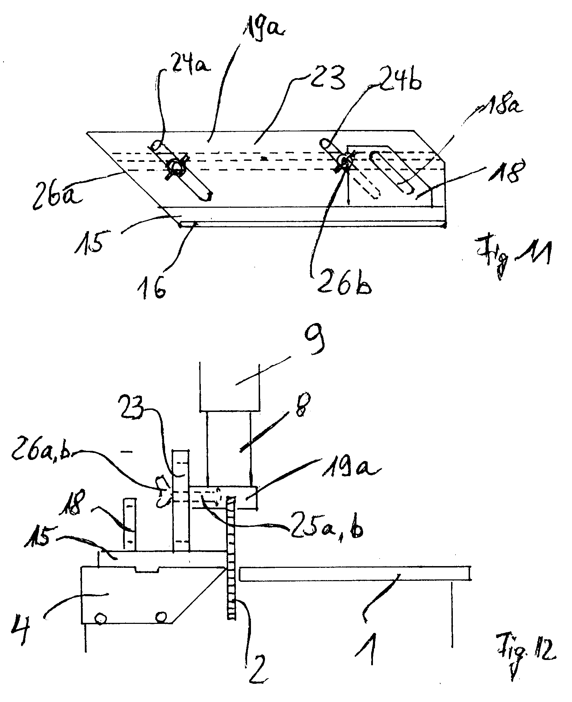

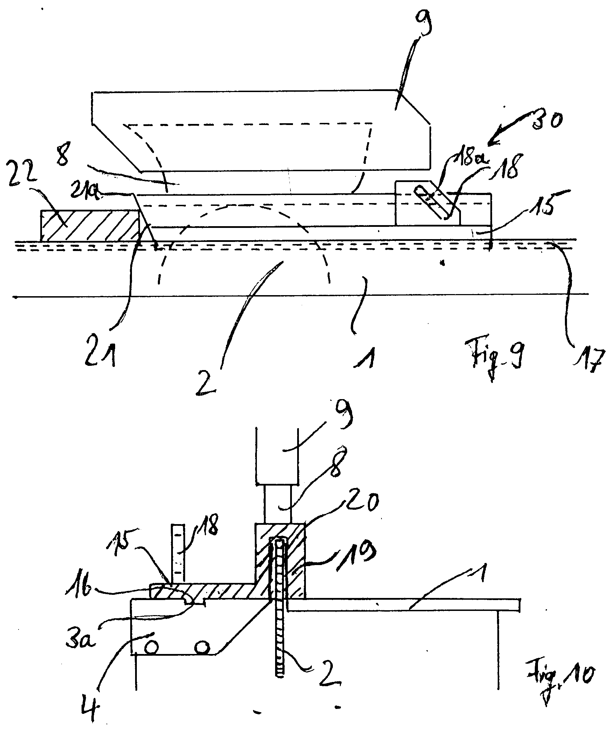

Ein solcher Abfallschieber 30 umfaßt, wie aus den Fig. 9 und 10 ersichtlich, einen Schlitten 15 mit einer oder zwei auf seiner Unterseite in seiner Längsrichtung verlaufenden Schienen 16. Die Schiene 16 wird entweder in eine im Maschinentisch 1 vorhandenen Nut 17 eingesetzt, so daß der Schlitten 15 in Längsrichtung des Maschinentisches 1 verschoben werden kann. Die Schiene 16 des Schlittens 15 kann aber auch in die Nut 3a oder 3b eines auf dem Maschinentisch 1 verschiebbaren Arbeitstisches 4 eingesetzt werden und mit dem Arbeitstisch 4 mittels einer Arretiereinrichtung 18 mit Handgriff 18a verbunden werden.

Längs der zur Kreissäge 3 hingerichteten Seitenkante des Schlittens 15 schließt sich eine U-förmige Abdeckhaube 19 an, deren Schlitzhöhe 20 mindestens der Höhe des über den Maschinentisch 1 hinausragenden Kreissägeblattes 2 entspricht. Die in Arbeitsrichtung vorderen Stirnflächen 21 von Schlitten 15 und Abdeckhaube 19 verlaufen schräg nach vorne und oben. Die Höhe der Abdeckhaube 19 ist stets höher als die Stärke des zu bearbeitenden Werkstückes 22. Hieraus ergibt sich der Vorteil, daß das zu bearbeitende Werkstück 22 gegen die Vibrationen des Maschinentisches 1 bei sich drehendem Sägeblatt 2 durch die Stirnfläche 21 auf den Masschinentisch 1 hinuntergedrückt wird.

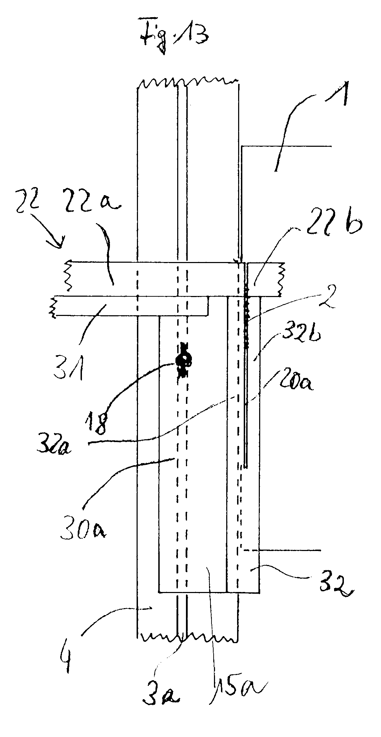

Um auch dickere Werkstücke 22 bearbeiten zu können, ist gemäß den Fig. 11 und 12 die U-förmige Abdeckhaube 19a an einer Trägerleiste 23 böhenverstellbar angeordnet. Die Trägerleiste 23 ist auf dem Schlitten 15 befestigt und verläuft in einem geringen Abstand von dem Kreissägeblatt 2 längs des Schlittens 15.

In der Trägerleiste 23 sind in einem Abstand voneinander zwei schräg verlaufende, zueinander parallel liegende, Stellschlitze 24a und 24b eingebracht. Mit der Trägerhaube 19a verbundene Gewindeschrauben 25a und 25b sind durch die Stellschlitze 24a und 24b hindurchgesteckt. Flügelmuttern 26a und 26b halten die Trägerhaube 19a in der Trägerleiste 23. Infolge der parallelen Anordnung der Schlitze 24a,b erfolgt eine Höhenverstellung der Trägerhaube 19a stets parallel zum Schlitten 15.

Die Gesamtlänge des Abfallschiebers 30 übersteigt, wie aus der Zeichnung ersichtlich, die Länge der Abdeckhaube 8 etwa um ein Drittel von deren Länge. Hierdurch wird erreicht, daß ein Werkstück 22, das bereits von der Kreissäge 2 bearbeitet wurde, mit Hilfe des Abfallschiebers 30 auch nach Verlassen des Sägebereiches auf dem Maschinentisch 1 weitergeschoben wird, wobei das Sägeblatt 2 durch die Abdeckhaube 19 oder 19a des Abfallschiebers 30 abgedeckt wird.

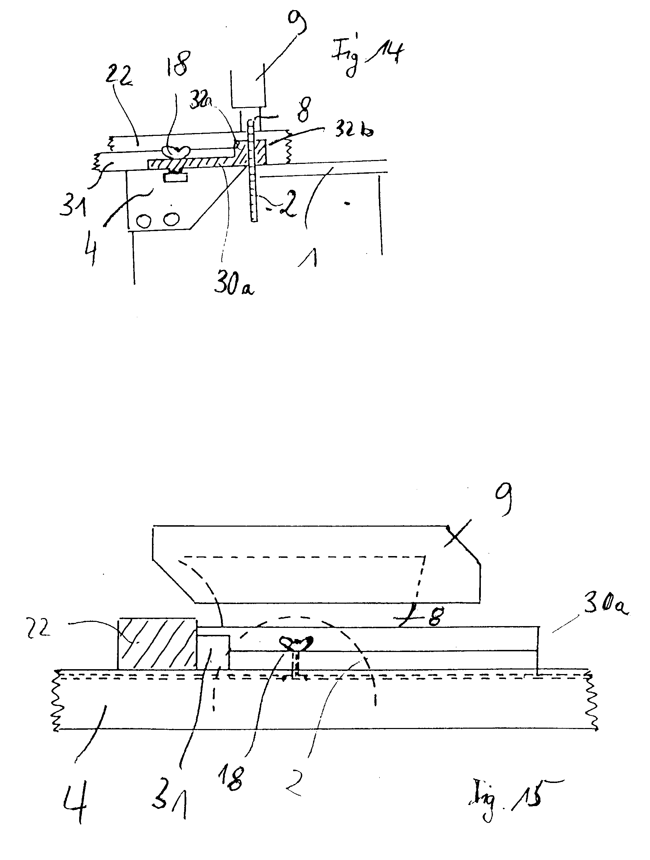

In den Fig. 13 bis 15 ist ein Arbeitstisch 1 mit einem, einen Queranschlag 31 tragenden, verschiebbaren Arbeitstisch 4 gezeigt. Der Arbeitstisch 4 kann in der Nut 3a des Arbeitstisches 1 entlang des Kreissägeblattes 2 verschoben werden. Auf dem Arbeitstisch 4 ist ein Abfallschieber 30a mittels Feststellschraube 18 arretiert.

Der Abfallschieber 30a wird daher zusammen mit dem verschiebbaren Arbeitstisch 4 bewegt, während das Werkstück 22 an dem Queranschlag 31 anliegt und zusammen mit dem Arbeitstisch durch das Kreissägeblatt geschoben wird.

Der Abfallschieber 30a unterscheidet sich von dem in den Fig. 9 bis 12 gezeigten Abfallschieber 30 durch den Ersatz der Abdeckhaube 19 oder 19a durch zwei in einem Abstand parallel voneinander längs des Schlittens 15a des Abfallschiebers 30a verlaufende, einen Spalt 20a für das Kreissägeblatt 2 definierende Leisten 32a und 32b, die im Bereich 32 des hinteren Drittels des Schlittens 15a des Abfallschiebers 30a miteinander verbunden sind. Der Längsschnitt der beiden Leisten 32,32a,b hat daher die Gestalt eines liegenden U. Die vordere Stirnfläche der Leisten 32a,b liegt bündig mit der freien Kante des Queranschlags 31 und grenzt dadurch unmittelbar an das zu bearbeitende Werkstück 22 an. Während das Werkstück 22 durch das Sägeblatt 2 hindurchgeschoben wird, wird der Abfallschieber 30a zusammen mit dem Arbeitstisch 4 und dem darauf befestigten Queranschlag 31 längs der Schiene 3a verschoben.

Das Kreissägeblatt 2 wird dabei beidseitig von den Leisten 32a und 32b seitlich abgedeckt.

Die Schutzhaube 8 liegt auf den Leisten 32a,b auf und deckt das Kreissägeblatt 2 so lange ab, bis das abgeschnittene Werkstückteil 22b mit Hilfe des Abfallschiebers 30a über das hintere Ende des Maschinentisches 1 hinausgeschoben ist und das bearbeitete Werkstück 22a von der Bedienungsperson weggenommen werden kann.

Der Abfallschieber 30 bzw. 30a stellt daher eine notwendige Kombination zu der Schutzhaube 8 mit Trägerhaube 9 dar, die deren Schutzwirkung dahingehend ergänzt, daß die Beseitigung des bei dem Sägeschnitt anfallenden Abfalls ebenfalls ohne Gefahr für die Bedienungsperson erfolgen kann.

Da die Abdeckhauben 19, 19a ebenso wie die beiden Leisten 32a und 32b im Laufe der Zeit einem gewissen Verschleiß unterworfen sind, sind beide Einrichtungen lösbar an dem Schlitten 15 bzw. 15a des Abfallschiebers 30 bzw. 30a befestigt und können jederzeit durch neue Teile ersetzt werden.

## Patentansprüche

1. Schutzvorrichtung für Kreissägen, umfassend eine am Maschinentisch (1) angeordnete Trägerhaube (7), die über einer Schutzhaube (8) angeordnet ist und die Schutzhaube (8) schwenkbar trägt, wobei die Schutzhaube (8) zwei parallel zum Sägespalt (5) ausgerichtete Längsseitenwände umfaßt und die Trägerhaube (7) die Form eines Kastens mit eckiger Grundfläche hat, der nach unten hin offen ist und dessen Längsseitenwände parallel zu den Längsseitenwänden der Schutzhaube (8) in einem Abstand voneinander verlaufen, der zumindest geringfügig größer ist als der Abstand der Außenflächen der Längsseitenwände der Schutzhaube, wobei ferner die Schwenkverbindung zwischen der Trägerhaube (7) und der Schutzhaube (8) durch ein Gelenkviereck gebildet ist, so daß sich die Schutzhaube (8) während des Arbeitsvorganges durch ein Werkstück infolge einer Parallelverschiebung in die Trägerhaube (8) entsprechend der Stärke des Werkstückes hinein nach oben bewegt, **dadurch gekennzeichnet,** daß
die parallelen Längsseitenwände der Schutzhaube (8) durch vordere und hintere Stirnflächen ( 8a,8b) miteinander verbunden sind, wobei die in Arbeitsrichtung gesehen hintere Stirnfläche (8a) eine kreiszylindrische konkave Form aufweist und bei Verschwenken der Schutzhaube (8) in einer Kreisbahn längs der freien Kante einer von einer hinteren Stirnfläche (7c) der Trägerhaube (7) bis zur hinteren Stirnfläche (8a) der Schutzhaube (8) reichenden Bodenfläche (7a) der Trägerhaube (7) in dichtendem Kontakt entlanggleitet, während sich gleichzeitig die obere Kante der vorderen Stirnfläche (8b) in dichtendem Kontakt mit einer innerhalb der Trägerhaube (7) vorgesehenen kreiszylindrischen Dichtungsfläche (7b) konkaver Form, deren Radius der von der oberen Kante der vorderen Stirnfläche (8b) durchlaufenden Kreisbahn entspricht, in die Trägerhaube (7) hineinbewegt,
daß eine Absaugleitung (10) in die Trägerhaube (7) hineinragt, die zu einer Absaugvorrichtung führt und
daß ferner ein Abfallschieber (30,30a) vorgesehen ist, der einen längs des Arbeitstisches verschiebbaren Schlitten (15,15a) umfaßt, an dessen einer Längsseite miteinander verbundene Schutzleisten 819,32a,b) angeordnet sind, die zwischen sich einen Spalt (20,20a) definieren, dessen Breite geringfügig größer als die Stärke des über die Oberfläche des Maschinentisches (1) hinausragenden Sägeblattes (2) ist und deren Höhe in Abhängigkeit von der Stärke des zu bearbeitenden Werkstückes (22,21a,b) wählbar ist.

2. Vorrichtung nach Anspruch 1, **dadurch gekennzeichnet**, daß die in Arbeitsrichtung vordere Stirnfläche (8b) der Schutzhaube (8) zu ihrem unteren Rand hin abgerundet ist.

3. Vorrichtung nach Anspruch 1 oder 2 (alter Anspruch 5), **dadurch gekennzeichnet**, daß an der Außenfläche der Trägerhaube (7) ein Schwenk- und Feststellhebel (11) zum Anheben und Feststellen der Schutzhaube (8) in angehobenem Zustand vorgesehen ist.

4. Vorrichtung nach einem der vorhergehenden Ansprüche **dadurch gekennzeichnet**, daß an der Trägerhaube (7) ein Not-Ausschalter (15) für die Kreissäge vorgesehen ist.

5. Vorrichtung nach einem der vorhergehenden Ansprüche, **dadurch gekennzeichnet**, daß die Trägerhaube (7) mittels einer Haltevorrichtung (6) schwenkbar am Maschinentisch (1) befestigt ist.

6. Vorrichtung nach einem der vorhergehenden Ansprüche, **dadurch gekennzeichnet**, daß eine Arretierungsvorrichtung (6a) für die nach oben geschwenkte Haltevorrichtung (6) vorgesehen ist.

7. Vorrichtung nach einem der vorhergehenden Ansprüche, **dadurch gekennzeichnet**, daß der in Arbeitsrichtung gesehen linke Seitenflächenbereich der Trägerhaube (7) fest mit der Haltevorrichtung (6) verbunden ist, während die rechte Seitenfläche sowie die Stirnflächen der Trägerhaube und die Schutzhaube (8) an dem fest mit der Haltevorrichtung (6) verbundenen Seitenbereich lösbar angeordnet sind.

8. Vorrichtung nach einem der vorhergehenden Ansprüche, **dadurch gekennzeichnet**, daß für den lösbaren Teil der Trägerhaube (7) und die Schutzhaube (8) Austauschteile (12, 13), umfassend eine Seitenfläche (12,) , Deck- und Stirnflächen (12a,) für die Trägerhaube (7) und eine Schutzhaube (13) vorgesehen sind, wobei die Deck- und Stirnflächen (12a) und die Schutzhaube (13) eine Breite aufweisen, die so gewählt ist, daß das bei Durchführung von Gehrungsschnitten aus der Vertikalen verschwenkte, über den Maschinentisch (1) hinausragende Kreissägeblatt (2) durch die verbreiterte Schutzhaube (13) vollständig überdeckt ist.

9. Vorrichtung nach einem der vorhergehenden Ansprüche, **dadurch gekennzeichnet**, daß die Schutzleisten zu einer U-förmigen Abdeckung (19) des Kreissägeblattes (2) miteinander verbunden sind.

10. Vorrichtung nach einem der vorhergehenden Ansprüche **dadurch gekennzeichnet**, daß längs des Schlittens (15) eine Trägerleiste (23) für die Schutzleisten (19a) angeordnet ist, die mit zwei parallel in einem spitzen Winkel zur Schlittenfläche (15) verlaufenden Schlitzen (24a,b) versehen ist, in denen mit den Schutzleisten (19a) verbundene Gewindeschrauben (15a,b) verschiebbar und mittels Flügelmuttern (26a,b) feststellbar sind.

11. Vorrichtung nach einem der vorhergehenden Ansprüche **dadurch gekennzeichnet**, daß die Stirnfläche (21) der Schutzleisten (19) zur Grundfläche des Schlitten schräg verläuft und eine in Verschieberichtung des Schlittens (15) nach vorne hinausragende obere Kante (21a) aufweist.

12. Vorrichtung nach einem der vorhergehenden Ansprüche **dadurch gekennzeichnet**, daß der Abfallschieber (30,30a) mit einer Arretierungseinrichtung (18,18a) versehen ist.

13. Vorrichtung nach einem der vorhergehenden Ansprüche **dadurch gekennzeichnet**, daß bei einem Maschinentisch (1) mit Schiebeschlitten (4) und darauf angeordnetem Queranschlag (31) der Abfallschieber (30a) mit dem Schiebeschlitten so verbindbar ist, daß die Stirnfläche der Schutzleisten (32a,b) mit der Stirnfläche des Queranschlags (31) fluchtet.

14. Vorrichtung nach einem der vorhergehenden Ansprüche **dadurch gekennzeichnet**, daß sich die Länge des durch die Schutzleisten definierten Spaltes (20a) nur über einen Teilbereich ihrer Gesamtlänge erstreckt und daß die Schutzleisten (32a,b) im Längsschnitt ein U-Profil aufweisen.

## Claims

1. Guard apparatus for circular saws, including a carrier hood (7) which is arranged on the machine table (1) and which is arranged above a guard hood (8) and which pivotably carries the guard hood (8), wherein the guard hood (8) includes two longitudinal side walls oriented parallel to the saw gap (5) and the carrier hood (7) is in the form of a box with an angular base surface which is open downwardly and whose longitudinal side walls extend parallel to the longitudinal side walls of the guard hood (8) at a mutual spacing at least slightly greater than the spacing of the outside surfaces of the longitudinal side walls of the guard hood, wherein moreover the pivotal connection between the carrier hood (7) and the guard hood (8) is formed by a quadrilateral link assembly so that during the working operation the guard hood (8) moves upwardly by a workpiece as a result of parallel displacement into the carrier hood (7) corresponding to the thickness of the workpiece, characterised in that
the parallel longitudinal side walls of the guard hood (8) are connected together by front and rear end faces (8a, 8b), wherein the end face (8a) which is the rear surface as viewed in the working direction is of a circular-cylindrical concave shape and upon pivotal movement of the guard hood (8) slides in sealing contact in a circular path along the free edge of a bottom surface (7a) of the carrier hood (7), said bottom surface extending from a rear end face (7c) of the carrier hood (7) to the rear end face (8a) of the guard hood (8), while at the same time the upper edge of the front end face (8b) moves into the carrier hood (7) in sealing contact with a circular-cylindrical sealing surface (7b) of concave shape which is provided within the carrier hood (7) and whose radius corresponds to the circular path extending from the upper edge of the front end face (8b),
a suction removal conduit (10) projects into the carrier hood (7) and leads to a suction removal device, and
there is also provided a waste thrust means (30, 30a) including a slider (15, 15a) which is displaceable along the working table and at one longitudinal side of which are arranged guard bars (19, 32a, b) which are connected together and which define between them a gap (20, 20a) whose width is slightly greater than the thickness of the saw blade (2) projecting above the surface of the machine table (1) and the height of which can be selected in dependence on the thickness of the workpiece (22, 21a, b) to be machined.

2. Apparatus according to claim 1 characterised in that the end face (8b) of the guard hood (8), which is the front face in the working direction, is rounded off towards its lower edge.

3. Apparatus according to claim 1 or claim 2 characterised in that a pivoting and fixing lever (11) for lifting the guard hood (8) and fixing it in the lifted condition is provided on the outside surface of the carrier hood (7).

4. Apparatus according to one of the preceding claims characterised in that an emergency off switch (15) for the circular saw is provided on the carrier hood (7).

5. Apparatus according to one of the preceding claims characterised in that the carrier hood (7) is pivotably secured to the machine table (1) by means of a holding arrangement (6).

6. Apparatus according to one of the preceding claims characterised in that there is provided an arresting device (6a) for the upwardly pivoted holding arrangement (6).

7. Apparatus according to one of the preceding claims characterised in that the side surface region of the carrier hood (7), which is at the left as viewed in the working direction, is fixedly connected to the holding arrangement (6) while the right-hand side surface and the end faces of the carrier hood and the guard hood (8) are releasably arranged on the side region which is fixedly connected to the holding arrangement (6).

8. Apparatus according to one of the preceding claims characterised in that provided for the releasable part of the carrier hood (7) and the guard hood (8) are replacement parts (12, 13) including a side surface (12), cover and end faces (12a) for the carrier hood (7) and a guard hood (13), wherein the cover and end faces (12a) and the guard hood (13) are of a width which is so selected that the circular saw blade (2) which is pivoted out of the vertical when effecting mitre cuts and which projects above the machine table (1) is completely covered by the widened guard hood (13).

9. Apparatus according to one of the preceding claims characterised in that the guard bars are connected together to form a U-shaped cover (19) for the circular saw blade (2).

10. Apparatus according to one of the preceding claims characterised in that a carrier bar (23) for the guard bars (19a) is arranged along the slider (15), the carrier bar being provided with two slots (24a, b) which extend parallel at an acute angle to the slider surface (15) and in which screwthreaded screws (15a, b) connected to the guard bars (19a) are displaceable and can be fixed by means of wing nuts (26a, b).

11. Apparatus according to one of the preceding claims characterised in that the end face (21) of the guard bars (19) extends inclinedly relative to the base surface of the slider and has an upper edge (21a) which projects forwardly in the direction of displacement of the slider (15).

12. Apparatus according to one of the preceding claims characterised in that the waste thrust means (30, 30a) is provided with an arresting device (18, 18a).

13. Apparatus according to one of the preceding claims characterised in that in a machine table (1) with thrust slider (4) and transverse stop (31) arranged thereon the waste thrust means (30a) can be so connected to the thrust slider that the end face of the guard bars (32a, b) aligns with the end face of the transverse stop (31).

14. Apparatus according to one of the preceding claims characterised in that the length of the gap (20a) defined by the guard bars extends only over a portion of the total length thereof and that the guard bars (32a, b) are of a U-shaped profile in longitudinal section.

## Revendications

1. Dispositif de protection pour scies circulaires, comportant un capot porteur (7) placé sur une table de machine (1) qui est disposé au-dessus d'un capot protecteur (8) et qui supporte le capot protecteur (8) de façon pivotante, le capot protecteur (8) englobant deux parois latérales longitudinales orientées parallèlement au trait de scie (5) et le capot porteur (7) ayant la forme d'une caisse présentant une surface de base à angles, qui est ouverte par le bas et dont les parois latérales longitudinales s'étendent parallèlement aux parois latérales longitudinales du capot protecteur (8) en formant un espace entre elles, lequel est au moins à peine plus large que l'espace des surfaces extérieures des parois latérales longitudinales du capot protecteur, la connexion pivotante entre le capot porteur (7) et le capot protecteur (8) étant en outre formée par un quadrilatère articulé, de telle sorte que le capot protecteur (8), au cours du processus de travail d'une pièce à travailler, par suite à un déplacement parallèle, remonte à l'intérieur du capot protecteur (8) en fonction de l'épaisseur de la pièce à travailler, caractérisé en ce que les parois latérales longitudinales parallèles du capot protecteur (8) sont reliées entre elles par des faces frontales avant et arrière (8a, 8b), la face frontale arrière (8a) considérée dans la direction de travail présentant une forme concave cylindrique circulaire et, lorsque le capot protecteur (8) est pivoté, coulissant longitudinalement dans une voie circulaire le long du bord libre d'une face de fond (7a) du capot porteur (7) s'étendant depuis une face frontale arrière (7c) du capot porteur (7) jusqu'à la face frontale arrière (8a) du capot protecteur (8) en un contact d'étanchement, tandis que, simultanément, le bord supérieur de la face frontale avant (8b) rentre à l'intérieur du capot porteur (7) en un contact d'étanchement avec une surface d'étanchéité cylindrique circulaire (7b) prévue à l'intérieur du capot porteur (7) de forme concave, dont le rayon correspond à la trajectoire circulaire parcourue par le bord supérieur de la face frontale avant (8b),
en ce qu'un tuyau d'aspiration (10) s'engage dans le capot porteur (7), qui conduit à un dispositif d'aspiration, et
en ce qu'en outre, un repousseur de déchets (30, 30a) est prévu, qui comporte, un chariot (15, 15a) qui se déplace le long de la table de travail, sur un grand côté duquel sont disposées des baguettes de protection reliées entre elles (19, 32a, b), qui définissent une fente (20, 20a) entre elles, dont la largeur est à peine plus large que l'épaisseur de la lame de scie (2) dépassant de la surface de la table de machine (1), et dont la hauteur peut être sélectionnée selon l'épaisseur de la pièce à travailler (22, 21a, b).

2. Dispositif selon la revendication 1, caractérisé en ce que la face frontale avant (8b), considérée dans la direction de travail, du capot protecteur (8) est arrondie vers son bord inférieur.

3. Dispositif selon la revendication 1 ou 2, caractérisé en ce qu'un levier pivotant et de blocage (11) est prévu sur la surface extérieure du capot porteur (7) pour relever et bloquer le capot protecteur (8) en position de relevage.

4. Dispositif selon l'une des revendications précédentes, caractérisé en ce qu'un interrupteur d'urgence (15) est prévu sur le capot porteur (7) pour la scie circulaire.

5. Dispositif selon l'une des revendications précédentes, caractérisé en ce que le capot porteur (7) est fixé de façon pivotante à la table de machine (1) au moyen d'un dispositif de blocage (6).

6. Dispositif selon l'une des revendications précédentes, caractérisé en ce qu'un dispositif d'arrêt (6a) est prévu pour le dispositif de blocage (6) pivoté vers le haut.

7. Dispositif selon l'une des revendications précédentes, caractérisé en ce que la zone de la face latérale gauche, considérée dans la direction de travail, du capot porteur (7) est reliée de façon fixe au dispositif de blocage (6), tandis que la face latérale droite, ainsi que les faces frontales du capot porteur et le capot protecteur (8) sont disposés de façon amovible sur la zone latérale reliée de façon fixe au dispositif de blocage (6).

8. Dispositif selon l'une des revendications précédentes, caractérisé en ce que des pièces de rechange (12, 13) sont prévues pour la partie amovible du capot porteur (7) et pour le capot protecteur (8), englobant une face latérale (12), des faces de couverture et frontales (12a) pour le capot porteur (7) et un capot protecteur (13), les faces de couverture et frontales (12a) et le capot protecteur (13) présentant une largeur qui est sélectionnée de telle sorte que la lame de scie circulaire (2) pivotée depuis la verticale lors de l'exécution de coupes d'onglets et ressortant sur le dessus de la table de machine (1) soit totalement recouverte par le capot protecteur (13) élargi.

9. Dispositif selon l'une des revendications précédentes, caractérisé en ce que les baguettes de protection sont reliées entre elles en un chapeau en forme de U (19) de la lame de scie circulaire (2).

10. Dispositif selon l'une des revendications précédentes, caractérisé en ce qu'une barre porteuse (23) pour les baguettes de protection (19a) est disposée le long du chariot (15), qui est dotée de deux rainures (24a, b) s'étendant en un angle aigu parallèlement à la surface du chariot (15), dans lesquelles des vis filetées (15a, b) reliées aux baguettes de protection (19a) peuvent être déplacées et fixées au moyen d'écrous à oreilles (26a, b).

11. Dispositif selon l'une des revendications précédentes, caractérisé en ce que la face frontale (21) des baguettes de protection (19) s'étend en biais par rapport à la surface de base du chariot et présente un bord supérieur (21a) faisant saillie vers l'avant dans la direction de déplacement du chariot (15).

12. Dispositif selon l'une des revendications précédentes, caractérisé en ce que le repousseur de déchets (30, 30a) est doté d'un dispositif d'arrêt (18, 18a).

13. Dispositif selon l'une des revendications précédentes, caractérisé en ce que, dans le cas d'une table de machine (1) dotée d'un chariot coulissant (4) et d'une butée transversale (31) disposée dessus, le repousseur de déchets (30a) peut être relié au chariot coulissant de telle sorte que la face frontale des baguettes de protection (32a, b) s'aligne sur la face frontale de la butée transversale (31).

14. Dispositif selon l'une des revendications précédentes, caractérisé en ce que la longueur de la fente (20a) définie par les baguettes de protection ne s'étend que sur une zone partielle de sa longueur totale, et en ce que les baguettes de protection (32a, b) présentent un profil en U en coupe longitudinale.
